# EUROPEAN PATENT APPLICATION

(11) **EP 4 819 126 A1**
(43) Date of publication of application: **07.10.2026**
(21) Application number: 24895476.0
(22) Date of filing: 24.05.2024
(51) Int. Cl.: G10L 15/00, B60R 25/20, B60R 25/24

(54) **INFORMATION IDENTIFICATION METHOD AND SYSTEM, VEHICLE, ELECTRONIC DEVICE, AND STORAGE MEDIUM**

(30) Priority: 27.11.2023 CN 202311603967
(71) Applicant: BYD Company Limited, Shenzhen, Guangdong 518118 (CN)
(72) Inventor: GUO, Yang, Shenzhen, Guangdong 518118 (CN); DU, Xianyou, Shenzhen, Guangdong 518118 (CN); FAN, Yongjie, Shenzhen, Guangdong 518118 (CN); ZHANG, Ruowen, Shenzhen, Guangdong 518118 (CN); WU, Difan, Shenzhen, Guangdong 518118 (CN)
(74) Representative: Mathys & Squire
(86) International application number: PCT/CN2024/095318
(87) International publication number: WO 2025/112366

(57) **Abstract**

An information identification method, an information identification system, a vehicle capable of implementing the information identification method, an electronic device, and a computer-readable storage medium. The information identification method applied to a first device comprises: playing back target audio; acquiring a first ambient sound file which is collected by the first device and comprises the target audio; receiving a second ambient sound file, wherein the second ambient sound file is obtained by collecting a second ambient sound by a second device; and on the basis of the first ambient sound file and the second ambient sound file, determining whether to perform an unlocking operation. By adding similarity analysis for sound information in physical environments of two end devices, the method can improve the security of keyless entry and reduce the risk of attacks on automobiles, and complex hardware does not need to be added, so that the deployment cost is low.

## Description

### CROSS-REFERENCE TO RELATED APPLICATIONS

The present disclosure claims priority to Chinese Patent Application No. 202311603967.4 filed with the China National Intellectual Property Administration on November 27, 2023, titled " INFORMATION IDENTIFICATION METHOD AND SYSTEM, VEHICLE, ELECTRONIC DEVICE, AND STORAGE MEDIUM", which is incorporated herein by reference in its entirety.

### FIELD

The present disclosure relates to the technical field of vehicles, and in particular, to an information identification method, system, vehicle, electronic device, and storage medium.

### BACKGROUND

With the rapid development of the vehicle industry, more intelligent functions and better user experience are provided to users. A keyless entry system allows a user to easily unlock a vehicle without carrying a physical key, which is convenient and fast, thereby improving the user's driving experience.

In the prior art, in a keyless vehicle unlocking scenario, attacks may exist. An attacker, by simulating legitimate keyless unlocking conditions, can illegally unlock a user's vehicle without the user's knowledge, thereby resulting in property loss.

### SUMMARY

In view of the above problems, embodiments of the present disclosure provide an information identification method, system, vehicle, electronic device, and storage medium that overcome the above problems or at least partially solve the above problems.

In a first aspect, an embodiment of the present disclosure provides an information identification method, the method is applied to a first device, and includes:
a target audio is played;
a first ambient sound file is acquired, and the first ambient sound file includes the target audio and is collected by the first device;
a second ambient sound file is received, the second ambient sound file is obtained by collecting a second ambient sound by a second device; and
whether to perform an unlocking operation is determined according to the first ambient sound file and the second ambient sound file.

In a second aspect, an embodiment of the present disclosure provides an information identification system, the system includes:
a first device, and a second device communicatively connected to the first device;
the first device is configured to play a target audio, and acquire a first ambient sound file, and the first ambient sound file includes the target audio and is collected by the first device;
the second device is configured to collect a second ambient sound to generate a second ambient sound file;
the first device is further configured to receive the second ambient sound file, and determine whether to perform an unlocking operation according to the first ambient sound file and the second ambient sound file.

In a third aspect, an embodiment of the present disclosure provides an electronic device, the electronic device includes:
a memory is configured to store a computer program; and
a processor is configured to execute the program stored in the memory to implement the steps of the information identification method according to the first aspect.

In a fourth aspect, an embodiment of the present disclosure provides a computer-readable storage medium having a computer program stored thereon, and the program implements the steps of the information identification method according to the first aspect when executed by a processor.

In a fifth aspect, an embodiment of the present disclosure provides a vehicle, and the vehicle includes the electronic device according to the third aspect.

In the embodiment of the present disclosure, after the first device plays the target audio, the first device collects the ambient sound to acquire a first ambient sound file including the target audio, the second device collects the ambient sound to generate a second ambient sound file, the first device receives the second ambient sound file, and whether to perform an unlocking operation is determined according to the first ambient sound file and the second ambient sound file, so as to identify whether an attack exists by the similarity analysis of the sound information in the physical environment of the dual-end device, which can improve the security of keyless entry, reduce the risk of vehicle attacks, and does not require the addition of complex hardware, and has low deployment cost.

The above description is merely an overview of the technical solution of the present disclosure, and can be implemented in accordance with the contents of the specification in order to more clearly understand the technical means of the present disclosure, and in order to make the above and other objects, features, and advantages of the present disclosure more obvious and understandable, specific embodiments of the present disclosure are specifically described below.

### BRIEF DESCRIPTION OF THE DRAWINGS

To more clearly illustrate the technical solutions in the embodiments of the present disclosure or in the prior art, the following briefly introduces the accompanying drawings required for describing the embodiments.
FIG. 1 shows a schematic diagram of an information identification method according to an embodiment of the present disclosure.
FIG. 2 shows a flowchart of similarity detection according to an embodiment of the present disclosure.
FIG. 3 shows an overall implementation flowchart of the information identification method according to an embodiment of the present disclosure.
FIG. 4 shows one schematic diagram of an information identification system according to an embodiment of the present disclosure.
FIG. 5 shows another schematic diagram of an information identification system according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are a part of the embodiments of the present disclosure, but not all of the embodiments. According to the embodiments of the present disclosure, all other embodiments obtained by the person skilled in the art without making creative efforts fall within the scope of protection of the present disclosure.

It will be understood that reference throughout the specification to "an embodiment" or "one embodiment" means that a particular feature, structure, or characteristic related to an embodiment is included in at least one embodiment of the present disclosure. Accordingly, appearances of "in one embodiment" or "in an embodiment" throughout the specification do not necessarily refer to the same embodiment. Furthermore, these particular features, structures, or characteristics may be incorporated in any suitable manner in one or more embodiments.

In various embodiments of the present disclosure, it will be understood that the size of the sequence numbers of the following processes does not mean the order of the execution order, and the execution order of each process will be determined by its function and inherent logic, and will not constitute any limitation on the implementation process of the embodiments of the present disclosure.

At present, in order to realize the keyless entry function in the keyless entry scene, the distance between the intelligent device held by the user and the vehicle can be detected, and when the distance between the two satisfies the condition, the vehicle can be controlled to perform an unlocking action to realize the keyless unlocking control of the vehicle. However, a keyless entry system that performs distance measurement solely according to Received Signal Strength Indication (RSSI) values is unable to prevent broadcast relay attacks, thereby presenting a security risk. The broadcast relay attack is to deploy a relay device between the intelligent device held by the user and the vehicle, and forward the communication data over a long distance, thus simulating legitimate conditions for keyless unlocking. This attack can illegally unlock the user's vehicle without the user's knowledge, potentially resulting in property loss. In order to prevent the keyless entry function from being attacked by broadcast relay, the following enhanced keyless entry methods are usually adopted at present.
1. The signal strength and direction are verified. This method improves the security to a certain extent, but after the signal is attacked by relay, there is a possibility that the signal strength and direction are consistent with the original signal. Consequently, this can defeat the relay attack defense, leading to security problems.
2. The position information of the Global Positioning System (GPS) of the intelligent terminal and the vehicle terminal is acquired to calculate the distance between the two, and the distance is compared with the distance obtained by calculating the RSSI value. This method improves security to a certain extent, but because a GPS locator is added, it can only be used when both the vehicle terminal and the intelligent terminal are connected to a network, resulting in insufficient applicability of the solution.
3. A manual gesture verification process is added. The method improves the security of the system to a certain extent, but it will reduce the convenience of using the solution, resulting in a poor user experience.

It can be seen that existing processing methods for preventing broadcast relay attacks have the problems of insufficient security, insufficient applicability, or reduced convenience.

To solve the above problems, an embodiment of the present disclosure provides an information identification method, which improves the security of a keyless entry system and reduces the risk of vehicle attacks by adding similarity analysis of sound information in the physical environments in which the vehicle terminal and the intelligent terminal are located.

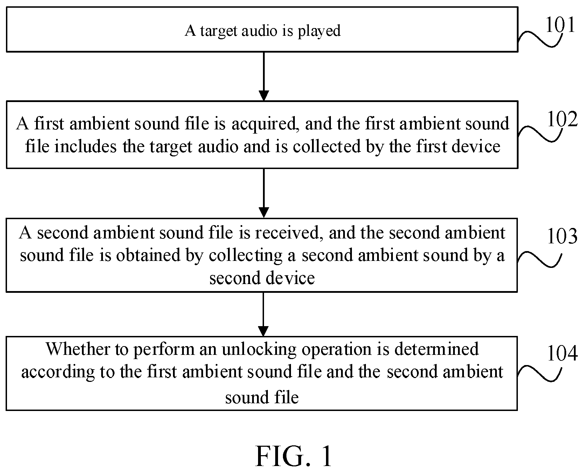

The information identification method according to the embodiment of the present disclosure is introduced below. The method is applied to a first device, as shown in FIG. 1, and the method includes the following steps:
Step 101: a target audio is played.

The first device in the embodiment of the present disclosure is a vehicle, and a communication connection is established between the first device and a second device. The second device is a mobile intelligent device, including but not limited to a smart phone and a smart wearable product, and the smart wearable product may be a smart watch, a smart bracelet, or the like. The communication between the first device and the second device may be network communication, Bluetooth communication, NFC (Near Field Communication) communication, infrared communication, or the like. By adopting Bluetooth communication, NFC communication or infrared communication, it is possible to realize the interaction between the first device and the second device without the need of networking without the help of a network environment. The interaction is not affected by the surrounding environment and has high applicability.

By playing a target audio, a first device adds sound information to a physical environment in which the first device is located. The target audio may be pre-stored in the first device, or may be generated by the first device before playing. A playing duration of the target audio is required to meet a certain duration requirement, thereby avoiding a collection failure caused by an excessively short playing duration of the target audio. Moreover, a playing volume of the target audio is required to be greater than a set volume threshold, thereby preventing the target audio from being obscured by other sounds.

Step 102: a first ambient sound file is acquired, and the first ambient sound file includes the target audio and is collected by the first device.

After the first device plays the target audio, the first device collects the audio information of the environment in which the first device is located. Since the target audio is required to last for a certain duration, the first device collects audio information on the current environment in which the first device is located, so the collected audio information includes the target audio. The first device acquires a first ambient sound file including the target audio according to the collected audio information.

The target audio may correspond to the default duration, and the target audio may be of any type, which is not specifically limited herein.

Step 103: a second ambient sound file is received, and the second ambient sound file is obtained by collecting a second ambient sound by a second device.

After the first device plays the target audio, a second device communicatively connected to the first device collects audio information on the environment in which the second device is located to acquire a second ambient sound, a second ambient sound file is generated according to the second ambient sound, and the first device receives the second ambient sound file generated by the second device.

The first device may transmit, to the second device, a collection instruction for instructing collection of an ambient sound. The second device collects the ambient sound according to the received collection instruction, to acquire a second ambient sound file.

If the distance between the first device and the second device is within a reasonable communication distance, a relay attack cannot be performed. At this time, the first device and the second device directly interact, and the first device directly receives the second ambient sound file transmitted by the second device. If the distance between the first device and the second device is long and a relay attack exists, the effective communication distance between the first device and the second device will be extended. At this time, the distance between the first device and the second device is not within the reasonable communication distance, and the second ambient sound file received by the first device is a forwarded second ambient sound file. As an embodiment, the effective communication distance between the first device and the second device is 10 meters. When the distance between the first device and the second device is 100 meters and a relay attack exists, the distance between the first device and the second device is not within the reasonable communication distance, and the signal received by the first device is a signal forwarded by a relay device.

Step 104: whether to perform an unlocking operation is determined according to the first ambient sound file and the second ambient sound file.

After acquiring the first ambient sound file and the second ambient sound file, the first device determines whether to perform an unlocking operation according to a similarity between the first ambient sound file and the second ambient sound file. If it is determined that the unlocking operation needs to be performed, the keyless unlocking process is continued and the vehicle is successfully unlocked, thereby realizing a keyless entry function; if it is determined that the unlocking operation does not need to be performed, it is determined that the vehicle is under attack, and the keyless unlocking process is stopped.

In the above embodiment of the present disclosure, after the first device plays the target audio, the first device collects the ambient sound to acquire the first ambient sound file including the target audio, the second device collects the ambient sound to generate the second ambient sound file, the first device receives the second ambient sound file, and whether to perform an unlocking operation is determined according to the first ambient sound file and the second ambient sound file, so as to identify whether an attack exists by the similarity analysis of the sound information in the physical environment of the dual-end device, which can improve the security of keyless entry, reduce the risk of vehicle attacks, and does not require the addition of complex hardware, and has low deployment cost.

In an embodiment of the present disclosure, when playing the target audio, the first device plays the target audio that is randomly generated and has a unique identifier.

The target audio played by the first device has a unique identifier, and the target audio is not allowed to be played repeatedly. The first device randomly generates the target audio before playing the target audio. In order to avoid the target audio being reused, the first device may delete the target audio after playing the target audio. Since the target audio is not allowed to be played repeatedly, the problem of replay attacks after being recorded can be avoided.

By playing the target audio that is unique and allowed to be played only once, replay attacks after being recorded can be avoided, thereby ensuring the security of the vehicle.

As another embodiment, before playing the target audio, the first device receives a first distance signal transmitted by the second device. The first device calculates a distance to the second device according to a Received Signal Strength Indicator (RSSI) value corresponding to the first distance signal; the first device plays the target audio when the calculated distance is less than or equal to a preset distance; and the first device receives a second distance signal transmitted by the second device when the calculated distance is greater than the preset distance; wherein the preset distance is a maximum distance for keyless unlocking.

The first device receives a first distance signal transmitted by the second device, for example, a Bluetooth connection is established between the first device and the second device, and the first device receives the first distance signal transmitted by the second device according to the Bluetooth connection.

Due to the possibility of a relay device being deployed, the first distance signal (e.g., a Bluetooth signal) received by the first device may not necessarily be transmitted directly by the second device, but may also be forwarded by a relay device. After receiving the first distance signal, the first device calculates a distance to the second device according to the first distance signal.

Signal strength and distance have a linear relationship. The first device can calculate the distance according to the RSSI value corresponding to the first distance signal. In the case where a relay device exists, the calculated distance is not the actual distance between the first device and the second device; in the case where no relay device exists, the first distance signal is transmitted directly by the second device, and the calculated distance is the actual distance between the first device and the second device.

The first device cannot determine whether or not the first distance signal is directly transmitted by the second device. When the calculated distance is less than or equal to a preset distance (satisfying the security distance of keyless unlocking), the target audio is output to verify whether or not the keyless entry function is subject to attacks according to the target audio. When the calculated distance is greater than the preset distance, the second distance signal transmitted by the second device may continue to be received.

The target audio may be audio randomly generated and played when the first device determines that the calculated distance is less than or equal to the preset distance, or may be a plurality of audio segments that are not repeated and randomly generated in advance, and one audio segment is randomly selected as the target audio to play during playing. By playing the randomly generated audio as the target audio, the randomly generated and unique audio can be selected as the auxiliary distance determination information, which can avoid the replay attack after being recorded and ensure the security.

Since the first distance signal may be transmitted by the second device or may be forwarded by the relay device, the first device, after determining that the restriction condition of keyless unlocking is satisfied according to the first distance signal, may evaluate whether the distance derived by the first distance signal is authentic and accurate by continuing to analyze the ambient audio to identify whether a relay attack exists.

When it is determined that the restriction condition of keyless unlocking is satisfied according to the calculated distance, target audio is output, and ambient sounds of the first device and the second device are analyzed according to the target audio to verify whether the calculated distance is the actual distance between the first device and the second device, thereby identifying whether a relay attack exists.

Taking Bluetooth-based communication between the first device and the second device as an example, a process of establishing communication between the first device and the second device will be introduced below.

The first device periodically transmits Bluetooth beacon messages.

After receiving the authentication connection transmitted by the second device, performing security authentication on the second device, and establishing a Bluetooth communication connection with the second device after the security authentication is passed.

The first device may periodically transmit Bluetooth beacon messages, and wait for the authentication connection of the second device. After receiving the authentication connection transmitted by the second device, the first device performs security authentication on the second device, and establishes a Bluetooth communication connection with the second device after the security authentication is passed. After the Bluetooth communication connection is established, the data interaction between the second device and the first device can be performed, and the transmission power and antenna performance parameters of the Bluetooth modules of the first device and the second device can be adjusted in order to keep the Bluetooth communication in a good state. The second device may perform security authentication on the first device. After the security authentication of both the second device and the first device are passed, a Bluetooth communication connection between the two is established.

The reliability of the Bluetooth communication connection can be guaranteed by performing security authentication on the first device and the second device. By adjusting the parameters of Bluetooth module, the communication state of Bluetooth communication can be guaranteed.

Hereinafter, a procedure for determining whether to perform an unlocking operation according to the first ambient sound file and the second ambient sound file will be described. When determining whether to perform an unlocking operation according to the first ambient sound file and the second ambient sound file, which includes:

when the similarity between the first ambient sound file and the second ambient sound file is greater than or equal to a preset threshold, it is determined to perform an unlocking operation.

When the similarity between the first ambient sound file and the second ambient sound file is less than the preset threshold, it is determined that an attack exists and the unlocking operation is not performed.

After acquiring the first ambient sound file and the second ambient sound file, the similarity between the first ambient sound file and the second ambient sound file is detected, and the acquired similarity is compared with a preset threshold. If the similarity is greater than or equal to the preset threshold, it indicates that the distance between the first device and the second device are within a reasonable communication distance, and the first device may perform the unlocking operation at this time. If the similarity between the first ambient sound file and the second ambient sound file is less than the preset threshold, it can be determined that an attack exists, and the first device does not perform the unlocking operation.

When the second ambient sound file is the actual ambient sound collected by the second device from the environment in which the second device is located,

if the similarity of the first ambient sound file and the second ambient sound file is less than the preset threshold, it can be determined that the distance between the first device and the second device are not within a reasonable communication distance. The first distance signal received by the first device and the second ambient sound file are forwarded by the relay device, a relay attack exists in the keyless unlocking scenario, and the first device does not perform the unlocking operation.

In another scenario, the target audio in the embodiment of the present disclosure is unique and is permitted to be played only once. When the distance between the first device and the second device is not within a reasonable communication distance, the first device plays audio 1. In this case, the second ambient sound file transmitted by the second device does not include the audio 1, or the second ambient sound file transmitted by the second device includes the audio 1, however, because the environments in which the two devices are located are different, other ambient sounds collected by the second device that are different from the audio 1 are different from those of the first device. When the first device plays the audio 2, the first device collects the first ambient sound file including the audio 2, and the second device transmits the second ambient sound file including the audio 1 (acquired by recording the audio 1). Since the similarity between the second ambient sound file including the audio 1 transmitted by the second device and the first ambient sound file including the audio 2 collected by the first device is low, and the similarity between the second ambient sound file including the audio 1 transmitted by the second device and the first ambient sound file including the audio 1 collected previously by the first device is high (both include the audio 1), it can be determined that a playback attack exists.

If it is determined through comparison between the similarity and a preset threshold that an attack exists, the first device disconnects the communication connection with the second device and terminates the current keyless unlocking process, ensuring unlocking security. If it is determined through comparison between the similarity and a preset threshold that no attack exists, the remaining keyless unlocking process continues to be executed until the vehicle is successfully unlocked, so as to ensure that keyless unlocking is achieved when the second device is located near the first device.

It will be noted that when determining whether to perform the unlocking operation according to the first ambient sound file and the second ambient sound file, the similarity deviation between the first ambient sound file and the second ambient sound file can also be acquired. When the similarity deviation between the two is small, such as less than or equal to a set deviation threshold, the unlocking operation can be determined to be performed, and correspondingly, if the similarity deviation between the two is large, such as greater than a set deviation threshold, the unlocking operation can be determined not to be performed.

When determining the similarity between the first ambient sound file and the second ambient sound file, it is necessary to acquire the first audio fingerprint data corresponding to the first ambient sound file and the second audio fingerprint data corresponding to the second ambient sound file, and then determine whether a similarity between the first audio fingerprint data and the second audio fingerprint data is greater than or equal to a preset threshold.

When acquiring the first audio fingerprint data and the second audio fingerprint data, the first ambient sound file is divided into M audio intervals, and the second ambient sound file is divided into N audio intervals, wherein M and N are integers greater than or equal to 1, respectively. A feature value corresponding to each audio interval is determined respectively. The first audio fingerprint data is generated according to the M feature values corresponding to the M audio intervals, and the second audio fingerprint data is generated according to the N feature values corresponding to the N audio intervals.

When acquiring the first audio fingerprint data corresponding to a first ambient sound file, the first ambient sound file is divided into M audio intervals. Since the value of M is greater than or equal to 1, at least one audio interval corresponding to the first ambient sound file can be obtained through interval division. For the M audio intervals, a feature value corresponding to each audio interval is determined, so as to acquire M feature values corresponding to the first ambient sound file. Then, the first audio fingerprint data corresponding to the first ambient sound file is determined according to the M feature values.

When acquiring the second audio fingerprint data corresponding to a second ambient sound file, the second ambient sound file is divided into N audio intervals. Since the value of N is greater than or equal to 1, at least one audio interval corresponding to the second ambient sound file can be obtained through interval division. For the N audio intervals, a feature value corresponding to each audio interval is determined, so as to acquire N feature values corresponding to the second ambient sound file. Then, the second audio fingerprint data corresponding to the second ambient sound file is determined according to the N feature values.

In an embodiment, when determining a feature value corresponding to each audio interval, for each audio interval, a Fourier transform may be performed on audio data corresponding to the audio interval to acquire frequency domain information; a sound signal feature value corresponding to a maximum frequency in the frequency domain information is set as the feature value corresponding to the audio interval.

For each audio interval, when the corresponding feature value is determined, a Fourier transform is performed on audio data corresponding to the audio interval to acquire frequency domain information corresponding to the audio data. The abscissa corresponding to the frequency domain information is the frequency, and the ordinate is a sound feature value corresponding to the frequency signal. After the frequency domain information is acquired according to the transformation, the sound signal feature value corresponding to the maximum frequency is set as the feature value corresponding to the audio interval, thereby achieving determination of the feature value corresponding to the audio interval according to the frequency domain information corresponding to the audio interval.

In an embodiment, the first audio fingerprint data is generated according to the M feature values corresponding to the M audio intervals, and the second audio fingerprint data is generated according to the N feature values corresponding to the N audio intervals, which includes:
the M feature values corresponding to the M audio intervals are arranged in a preset order to acquire the first audio fingerprint data; and the N feature values corresponding to the N audio intervals are arranged in a preset order to acquire the second audio fingerprint data; wherein the preset order is a time order, and the value of M is equal to N.

After acquiring the M feature values corresponding to the first ambient sound file, the M feature values corresponding to the first ambient sound file may be arranged according to a time arrangement order corresponding to the M audio intervals of the first ambient sound file, to determine the first audio fingerprint data; after acquiring the N feature values corresponding to the second ambient sound file, the N feature values corresponding to the second ambient sound file may be arranged according to a time arrangement order corresponding to the N audio intervals of the second ambient sound file, to determine the second audio fingerprint data.

In this embodiment, the durations corresponding to the first ambient sound file and the second ambient sound file may be the same. When dividing the audio intervals, the first ambient sound file and the second ambient sound file adopt the same division strategy, that is, the value of M is equal to N, and the durations corresponding to the N audio intervals may be equal, or each audio interval may correspond to a certain duration, or other situations. The duration of each audio interval corresponding to the first ambient sound file corresponds to the duration of each audio interval corresponding to the second ambient sound file in an one-to-one correspondence, which can ensure that audio fingerprint data comparison is performed according to the same number of feature values.

When determining whether a similarity between first audio fingerprint data and second audio fingerprint data is greater than or equal to a preset threshold, the method includes acquiring a similarity comparison result according to at least one of a Euclidean distance, a cross-correlation, and a cosine similarity of the first audio fingerprint data and the second audio fingerprint data. When the similarity comparison result indicates that the first audio fingerprint data and the second audio fingerprint data are similar, it is determined that the similarity between the first audio fingerprint data and the second audio fingerprint data is greater than or equal to the preset threshold.

After acquiring the first audio fingerprint data and the second audio fingerprint data, at least one of the Euclidean distance, the cross-correlation, and the cosine similarity may be calculated according to the first audio fingerprint data and the second audio fingerprint data, and a similarity comparison result may be acquired according to the calculation result.

The greater the Euclidean distance, the smaller the similarity, the greater the cross-correlation, the greater the similarity, and the greater the cosine similarity, the more similar. After determining a similarity comparison result according to at least one of Euclidean distance, cross-correlation, and cosine similarity, it may be determined whether the first audio fingerprint data and the second audio fingerprint data are similar. When the similarity comparison result indicates that the first audio fingerprint data and the second audio fingerprint data are similar, the similarity between the two is determined to be greater than or equal to a preset threshold.

When the similarity comparison result includes two of a Euclidean distance, a cross-correlation, and a cosine similarity, it may be determined that the first audio fingerprint data and the second audio fingerprint data are similar when the two respectively satisfy corresponding conditions. For example, when the Euclidean distance is less than a set distance value and the cosine similarity is greater than a set value, it is determined that the first audio fingerprint data and the second audio fingerprint data are similar. When the similarity comparison result includes a Euclidean distance, a cross-correlation, and a cosine similarity, it may be determined that the first audio fingerprint data and the second audio fingerprint data are similar when at least two of them respectively satisfy corresponding conditions.

In the above implementation process, M feature values corresponding to the first ambient sound file and N feature values corresponding to the second ambient sound file are acquired by performing interval division, the first audio fingerprint data can be generated according to the M feature values, and the second audio fingerprint data can be generated according to the N feature values. The similarity between the first audio fingerprint data and the second audio fingerprint data can be compared in at least one dimension, so that the similarity between the first ambient sound file and the second ambient sound file can be determined according to the comparison result in at least one dimension.

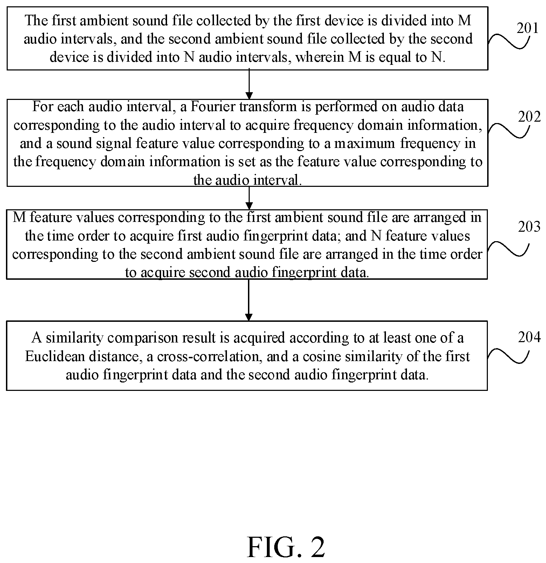

Hereinafter, the process for detecting the similarity between the first ambient sound file and the second ambient sound file is described through a specific implementation flow, as shown in FIG. 2, which includes:
Step 201: the first ambient sound file collected by the first device is divided into M audio intervals, and the second ambient sound file collected by the second device is divided into N audio intervals, wherein M is equal to N.
Step 202: for each audio interval, a Fourier transform is performed on audio data corresponding to the audio interval to acquire frequency domain information, and a sound signal feature value corresponding to a maximum frequency in the frequency domain information is set as the feature value corresponding to the audio interval.
Step 203: M feature values corresponding to the first ambient sound file are arranged in the time order to acquire first audio fingerprint data; and N feature values corresponding to the second ambient sound file are arranged in the time order to acquire second audio fingerprint data.
Step 204: a similarity comparison result is acquired according to at least one of a Euclidean distance, a cross-correlation, and a cosine similarity of the first audio fingerprint data and the second audio fingerprint data.

The above process can better perform feature extraction by performing interval division. After the first audio fingerprint data and the second audio fingerprint data are acquired by feature extraction and feature value arrangement, similarity comparison is performed according to at least one of a Euclidean distance, a cross-correlation, and a cosine similarity, thereby enabling similarity comparison in at least one dimension.

As an embodiment, after the target audio is played, the first device and the second device collect ambient sound within the same period of time to acquire the first ambient sound file and the second ambient sound file.

After playing the target audio, the first device collects the ambient sound to acquire the first ambient sound file, and while the first device collects the ambient sound, the second device synchronously collects the ambient sound to acquire the second ambient sound file. The first device may transmit a collection instruction to the second device before collecting the ambient sound, and the collection instruction instructs the two devices to collect the ambient sound at the same time, so that the first device and the second device collect the ambient sound at the same period of time after playing the target audio.

The collection instruction may carry a collection time to indicate when the second device will perform audio collection on the environment in which the second device is located. The first device may transmit the collection instruction before playing the target audio, so that the second device can immediately perform audio collection on the environment in which the second device is located after the target audio is played. For the first device, the first device may also perform audio collection on the environment in which the first device is located according to the collection instruction. Since both the first device and the second device perform audio collection according to the collection instruction, it can be ensured that the first ambient sound file and the second ambient sound file corresponding to the same period of time are acquired.

If the collection instruction only carries a collection time, collection may be stopped after a default collection duration. The collection instruction may also carry a collection time and an end time, or carry a collection time and a collection duration, so as to ensure that the first device and the second device collect ambient sound at the same period of time.

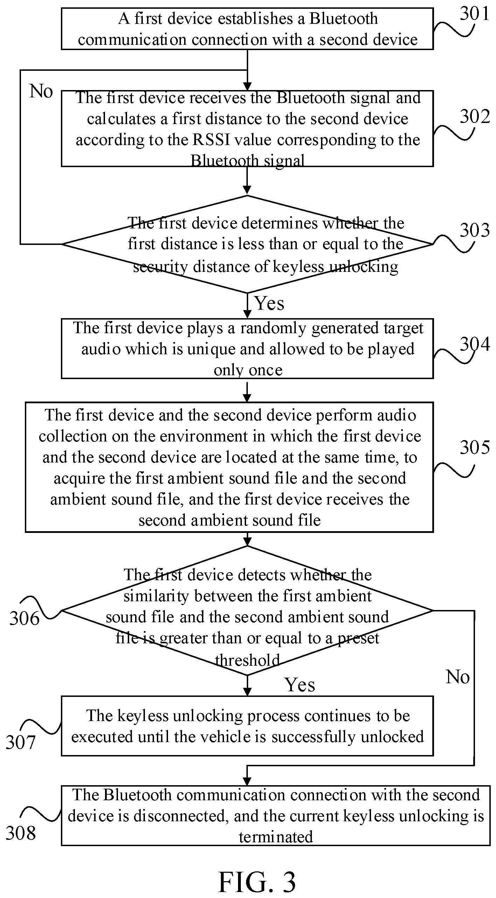

Various embodiments of the information identification method are described above, and the overall flow of the information identification method is described below through a specific embodiment, as shown in FIG. 3, which includes:
Step 301: a first device establishes a Bluetooth communication connection with a second device.
Step 302: the first device receives the Bluetooth signal and calculates a first distance to the second device according to the RSSI value corresponding to the Bluetooth signal.
Step 303: the first device determines whether the first distance is less than or equal to the security distance of keyless unlocking. If yes, step 304 is executed; otherwise, return to step 302.
Step 304: the first device plays a randomly generated target audio which is unique and allowed to be played only once.
Step 305: the first device and the second device perform audio collection on the environment in which the first device and the second device are located at the same time, to acquire the first ambient sound file and the second ambient sound file, and the first device receives the second ambient sound file.
Step 306: the first device detects whether the similarity between the first ambient sound file and the second ambient sound file is greater than or equal to a preset threshold. If yes, step 307 is executed, otherwise, step 308 is executed.
Step 307: the keyless unlocking process continues to be executed until the vehicle is successfully unlocked.
Step 308: the Bluetooth communication connection with the second device is disconnected, and the current keyless unlocking is terminated.

In the above implementation flow, ambient sound perception can be introduced to enhance verification of whether the keyless entry function is subject to a relay attack, thereby largely preventing relay attacks and improving the security of keyless entry while maintaining the convenience of use. In the process of mutual authentication between the first device and the second device, the randomly generated and unique sound is selected as the auxiliary distance determination information, which can avoid the replay attack after being recorded and ensure the security of the system.

The above is an overall implementation flow of the information identification method provided by the embodiment of the present disclosure. After the first device collects the ambient sound to acquire a first ambient sound file including the target audio, the second device collects the ambient sound to generate a second ambient sound file, the first device receives the second ambient sound file, and whether to perform an unlocking operation is determined according to the first ambient sound file and the second ambient sound file, so as to identify whether there is an attack by the similarity analysis of the sound information in the physical environment of the dual-end device, which can improve the security of keyless entry, reduce the risk of vehicle attacks, and does not require the addition of complex hardware, and has low deployment cost. The solution does not require the addition of complex hardware, and has low deployment cost. Moreover, the solution does not need to work in the state of networking, and has high applicability.

By acquiring a similarity between the first ambient sound file and the second ambient sound file, the similarity is compared with a preset threshold. Whether the actual distance between the first device and the second device satisfies an unlocking condition is detected according to a comparison result. By adding perception of ambient sound information, the accuracy and reliability of RSSI distance measurement can be evaluated, thereby reducing a risk of the keyless entry function encountering a relay attack. By playing a target audio that is unique and allowed to be played only once, a replay attack after being recorded can be avoided, ensuring security.

M feature values corresponding to the first ambient sound file and N feature values corresponding to the second ambient sound file are acquired by performing interval division, the first audio fingerprint data can be generated according to the M feature values, and the second audio fingerprint data can be generated according to the N feature values. The similarity between the first audio fingerprint data and the second audio fingerprint data can be compared in at least one dimension, so that the similarity between the first ambient sound file and the second ambient sound file can be determined according to the comparison result in at least one dimension.

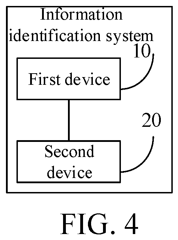

An embodiment of the present disclosure provides an information identification system, as shown in FIG. 4, the system includes:
a first device 10, and a second device 20 communicatively connected to the first device 10.

The first device 10 is configured to play a target audio, and acquire a first ambient sound file, and the first ambient sound file includes the target audio and is collected by the first device 10.

The second device 20 is configured to collect a second ambient sound to generate a second ambient sound file.

The first device 10 is further configured to receive the second ambient sound file, and determine whether to perform an unlocking operation according to the first ambient sound file and the second ambient sound file.

By playing a target audio, a first device 10 adds sound information into a physical environment in which the first device is located, after the first device plays the target audio, the first device collects the audio information of the environment in which the first device is located to acquire a first ambient sound file including the target audio. After the first device 10 plays the target audio, a second device 20 communicatively connected to the first device 10 collects audio information on the environment in which the second device is located to acquire a second ambient sound, a second ambient sound file is generated according to the second ambient sound, and the first device 10 receives the second ambient sound file generated by the second device 20.

The first device 10 may transmit, to the second device 20, a collection instruction for instructing collection of an ambient sound. The second device 20 collects the ambient sound according to the received collection instruction, to acquire a second ambient sound file. The first device 10 and the second device 20 collect ambient sounds within the same period of time to acquire audio information in different environments at the same period of time.

After acquiring the first ambient sound file and the second ambient sound file, the first device 10 determines whether or not the first device 10 performs an unlocking operation according to a similarity between the first ambient sound file and the second ambient sound file. If it is determined that the unlocking operation needs to be performed, the keyless unlocking process is continued and the vehicle is successfully unlocked, thereby realizing a keyless entry function; if it is determined that the unlocking operation does not need to be performed, it is determined that the vehicle is under attack, and the keyless unlocking process is stopped.

The first device 10 is a vehicle, the second device 20 is a mobile intelligent device, including but not limited to a smart phone and a smart wearable product, and the smart wearable product may be a smart watch, a smart bracelet, or the like.

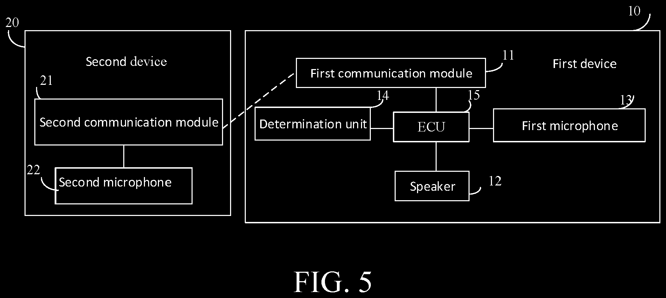

In an embodiment, as shown in FIG. 5, the first device 10 includes a first communication module 11, a speaker 12, a first microphone 13, a determination unit 14, and an electronic control unit (ECU) 15; and the second device 20 includes a second communication module 21 and a second microphone 22.

The first communication module 11 establishes a connection with the second communication module 21, the second communication module 21 is connected to the second microphone 22, and the first communication module 11, the speaker 12, the first microphone 13, and the determination unit 14 are respectively connected to the ECU 15.

The speaker 12 is configured to play the target audio that is randomly generated and has a unique identifier. Before the speaker 12 plays the target audio, the first communication module 11 receives a first distance signal transmitted by the second communication module 21, and calculates a distance to the second device 20 according to an RSSI value corresponding to the first distance signal. When the calculated distance is less than or equal to a preset distance, the ECU 15 controls the speaker 12 to play the target audio. When the calculated distance is greater than the preset distance, the first communication module 11 continues to wait for receiving a second distance signal transmitted by the second communication module 21. The preset distance is a maximum distance for keyless unlocking.

The first communication module 11 and the second communication module 21 may be Bluetooth modules, network modules, NFC modules, or other types of communication modules. This embodiment is described by taking the communication modules being Bluetooth modules as an example. The first communication module 11 receives a first distance signal transmitted by the second communication module 21, and calculates a distance between the first device 10 and the second device 20 according to an RSSI value corresponding to the first distance signal. After acquiring the distance through calculation, it is detected whether the calculated distance is less than or equal to a preset distance. If the calculated distance is less than or equal to the preset distance, the ECU 15 is notified, and the ECU 15 controls the speaker 12 to play the target audio. If the calculated distance is greater than the preset distance, the first communication module 11 may continue to wait for receiving a second distance signal transmitted by the second communication module 21.

After the speaker 12 plays the target audio, the ECU 15 controls the first microphone 13 to collect ambient sound, and controls the first communication module 11 to transmit a collection instruction to the second communication module 21. The collection instruction may also be transmitted to the second communication module 21 before the target audio is played. The second communication module 21 transmits the collection instruction to the second microphone 22, and the second microphone 22 collects ambient sound according to the collection instruction. The collection instruction may carry a collection time and an end time, or carry a collection time and a collection duration, so that the second microphone 22 can collect audio for a corresponding duration of the environment in which the second microphone 22 is located after the target audio is played. Alternatively, the collection instruction may carry only a collection time, and the microphone collects ambient sound for the default duration.

It will be noted that when the ECU 15 controls the first microphone 13 to collect ambient sound, the first microphone 13 needs to acquire a collection time and a collection duration. The collection time and end time for the first microphone 13 to collect ambient sound are the same as the collection time and end time for the second microphone 22 to collect ambient sound, thereby ensuring that the first ambient sound file and the second ambient sound file corresponding to the same period of time are acquired.

In an embodiment, after the second ambient sound file is acquired by the second microphone 22, the second ambient sound file is transmitted to the second communication module 21, the second communication module 21 transmits the second ambient sound file to the first communication module 11, and the first communication module 11 transmits the second ambient sound file to the determination unit 14 through the ECU 15. After the first ambient sound file is acquired by the first microphone 13, and the first ambient sound file is transmitted to the determination unit 14 through the ECU 15. At this point, the determination unit 14 acquires the first ambient sound file and the second ambient sound file.

After acquiring the first ambient sound file and the second ambient sound file, the determination unit 14 determines whether to perform an unlocking operation according to the similarity of the first ambient sound file and the second ambient sound file. When the similarity between the first ambient sound file and the second ambient sound file is greater than or equal to a preset threshold value, the determination unit 14 notifies the ECU 15, and the ECU 15 performs an unlocking operation. When the similarity between the first ambient sound file and the second ambient sound file is less than the preset threshold value, it is determined that an attackexists, and the ECU 15 does not perform the unlocking operation at this time.

When determining whether the similarity between the first ambient sound file and the second ambient sound file is greater than or equal to a preset threshold value, the determination unit 14 determines whether the similarity between the first audio fingerprint data corresponding to the first ambient sound file and the second audio fingerprint data corresponding to the second ambient sound file is greater than or equal to a preset threshold value.

That is, it is necessary to acquire the first audio fingerprint data and the second audio fingerprint data before the determination unit 14 executes the determination. When acquiring audio fingerprint data, the determination unit 14 is configured to divide the first ambient sound file into M audio intervals and divide the second ambient sound file into N audio intervals, wherein M and N are integers greater than or equal to 1, respectively. A feature value corresponding to each audio interval is determined respectively. The first audio fingerprint data is generated according to the M feature values corresponding to the M audio intervals, and the second audio fingerprint data is generated according to the N feature values corresponding to the N audio intervals.

When determining the feature value corresponding to each audio interval, the determination unit 14 is configured to: perform Fourier transform on the audio data corresponding to the audio interval for each audio interval to acquire frequency domain information; and the determination unit 14 is configured to set a sound signal feature value corresponding to a maximum frequency in the frequency domain information as the feature value corresponding to the audio interval.

When the first audio fingerprint data is generated according to the M feature values corresponding to the M audio intervals, and the second audio fingerprint data is generated according to the N feature values corresponding to the N audio intervals, the determination unit 14 is configured to: arrange the M feature values corresponding to the M audio intervals in a preset order to acquire the first audio fingerprint data; and the determination unit 14 is configured to arrange the N feature values corresponding to the N audio intervals in a preset order to acquire the second audio fingerprint data; wherein the preset order is a time order, and the value of M is equal to N.

Detailed procedures for acquiring the first audio fingerprint data and the second audio fingerprint data can be referred to the introduction on the method side, and will not be described in detail here.

After acquiring the first audio fingerprint data and the second audio fingerprint data, the determination unit 14 acquires a similarity comparison result according to at least one of the Euclidean distance, the cross-correlation, and the cosine similarity of the first audio fingerprint data and the second audio fingerprint data. When the similarity comparison result indicates that the first audio fingerprint data and the second audio fingerprint data are similar, the determination unit 14 determines that the similarity between the first audio fingerprint data and the second audio fingerprint data is greater than or equal to the preset threshold.

By comparing the similarity between the first audio fingerprint data and the second audio fingerprint data in at least one dimension, it is possible to determine the similarity between the first ambient sound file and the second ambient sound file according to the comparison result of the at least one dimension. For a detailed process of how to perform the similarity comparison of audio fingerprint data, reference may be made to the description on the method side, and will not be described in detail here.

In the information identification system provided by the embodiment of the present disclosure, ambient sound perception can be introduced to enhance verification of whether the keyless entry function is subject to a relay attack, thereby preventing relay attacks to a large extent and improving the security of keyless entry while maintaining the convenience of use. In the process of mutual authentication between the first device and the second device, the randomly generated and unique sound is selected as the auxiliary distance determination information, which can avoid the replay attack after being recorded and ensure the security of the system. Moreover, the system only needs to add ambient sound sensors, the deployment cost is low, and the system does not need to work in the state of networking, and has high applicability.

For the above information identification system embodiment, since it is substantially similar to the information identification method embodiment, reference may be made to the partial description of the method embodiment for relevant details.

An embodiment of the present disclosure provides an electronic device, the electronic device includes a memory and a processor. The processor and the memory communicate with each other via a communication bus. The memory is configured to store a computer program. The processor is configured to, when executing the program stored in the memory, implement the following steps: the target audio is played. The first ambient sound file is acquired, and the first ambient sound file includes the target audio and is collected by the first device. The second ambient sound file is received, and the second ambient sound file is obtained by collecting a second ambient sound by a second device. Whether to perform an unlocking operation is determined according to the first ambient sound file and the second ambient sound file. The processor may also implement other steps in the above information identification method, which will not be described in detail herein.

The communication bus mentioned in the electronic device may be a Peripheral Component Interconnect (PCI) bus, an Extended Industry Standard Architecture (EISA) bus, or the like. The communication bus can be divided into address bus, data bus, control bus, etc. For ease of representation, only one thick line is used in the drawing, but does not indicate that there is only one bus or one type of bus.

The communication interface is configured to communicate the terminal with other devices.

The memory may include a Random Access Memory (RAM), and may also include a non-volatile memory, such as at least one disk memory. In an embodiment, the memory may also be at least one storage device located remotely from the aforementioned processor.

The above processor may be a general-purpose processor, including a Central Processing Unit (CPU), a Network Processor (NP), etc.; it may also be a Digital Signal Processor (DSP), an Application Specific Integrated Circuit (ASIC), a Field-Programmable Gate Array (FPGA) or other programmable logic devices, discrete gate or transistor logic devices, or discrete hardware components.

In another embodiment provided by the present disclosure, a computer-readable storage medium is also provided, instructions are stored in the computer-readable storage medium, and when executed on a computer, the computer executes the information identification method described in the above-described embodiment.

In another embodiment provided by the present disclosure, a computer program product including instructions is also provided, and when executed on a computer, the computer executes the information identification method described in the above-described embodiment.

An embodiment of the present disclosure further provides a vehicle, and the vehicle includes the above electronic device.

In the above embodiments, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, processes or functions according to embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center by wired (e.g., coaxial cable, fiber optic, digital subscriber line (DSL)) or wireless (e.g., infrared, wireless, microwave, etc.). The computer-readable storage medium may be any available medium accessible by a computer or a data storage device such as a server, a data center, or the like incorporating one or more available media integrations. The available medium may be a magnetic medium (e.g., a floppy Disk, a hard Disk, a magnetic tape), an optical medium (e.g., a DVD), or a semiconductor medium (e.g., a Solid State Disk (SSD)), or the like.

It is noted that, herein, relational terms such as first and second are merely used to distinguish one entity or operation from another entity or operation, and do not necessarily require or imply that there exists any such actual relationship or order between these entities or operations. Furthermore, the terms "comprises", "includes," or any other variation thereof are intended to encompass a non-exclusive inclusion such that a process, method, article, or apparatus comprising a list of elements includes not only those elements, but also other elements not explicitly listed, or elements inherent to such a process, method, article, or apparatus. Without further limitation, an element defined by the statement "comprises a..." does not exclude the presence of additional identical elements in a process, method, article, or apparatus that includes said element.

Each embodiment in the present specification is described in a related manner, and the same and similar parts between each embodiment may be referred to with respect to each other, and each embodiment is emphatically described with respect to the differences from other embodiments. In particular, since the system embodiment is basically similar to the method embodiment, the description is relatively simple, and the relevant details may be referred to the partial description of the method embodiment.

The above are only preferred embodiments of the present disclosure, and are not intended to limit the scope of protection of the present disclosure. Any modifications, equivalent substitutions, improvements, etc. made within the spirit and principles of the present disclosure are included in the scope of protection of the present disclosure.

## Claims

1. An information identification method, applied to a first device, comprising:
playing a target audio;
acquiring a first ambient sound file, and the first ambient sound file comprising the target audio and being collected by the first device;
receiving a second ambient sound file, the second ambient sound file being obtained by collecting a second ambient sound by a second device; and
determining whether to perform an unlocking operation according to the first ambient sound file and the second ambient sound file.

2. The method according to claim 1, wherein the playing a target audio comprises:
playing the target audio, and the target audio is randomly generated and has a unique identifier.

3. The method according to claim 1 or 2, wherein before playing the target audio, the method further comprises:
receiving a first distance signal transmitted by the second device.

4. The method according to claim 3, wherein the method further comprises:
calculating a distance to the second device according to a Received Signal Strength Indicator (RSSI) value corresponding to the first distance signal;
playing the target audio when the calculated distance is less than or equal to a preset distance; and
receiving a second distance signal transmitted by the second device when the calculated distance is greater than the preset distance;
wherein the preset distance is a maximum distance for keyless unlocking.

5. The method according to any one of claims 1 to 4, wherein determining whether to perform the unlocking operation according to the first ambient sound file and the second ambient sound file comprises:
determining to perform an unlocking operation, when a similarity between the first ambient sound file and the second ambient sound file is greater than or equal to a preset threshold; and
determining that an attack exists and the unlocking operation is not performed, when a similarity between the first ambient sound file and the second ambient sound file is less than the preset threshold.

6. The method according to claim 5, wherein the method further comprises:
determining whether a similarity between first audio fingerprint data corresponding to the first ambient sound file and second audio fingerprint data corresponding to the second ambient sound file is greater than or equal to the preset threshold.

7. The method according to claim 6, wherein determining whether the similarity between first audio fingerprint data corresponding to the first ambient sound file and second audio fingerprint data corresponding to the second ambient sound file is greater than or equal to the preset threshold comprises:
acquiring a similarity comparison result according to at least one of a Euclidean distance, a cross-correlation, and a cosine similarity of the first audio fingerprint data and the second audio fingerprint data; and
determining that the similarity between the first audio fingerprint data and the second audio fingerprint data is greater than or equal to the preset threshold, when the similarity comparison result indicates that the first audio fingerprint data and the second audio fingerprint data are similar.

8. The method according to claim 7, wherein the method further comprises:
dividing the first ambient sound file into M audio intervals and dividing the second ambient sound file into N audio intervals, wherein M and N are integers greater than or equal to 1, respectively;
determining a feature value corresponding to each audio interval, respectively; and
generating first audio fingerprint data according to M feature values corresponding to the M audio intervals, and generating second audio fingerprint data according to N feature values corresponding to the N audio intervals.

9. The method according to claim 8, wherein determining the feature value corresponding to each audio interval, respectively, comprises:
for each audio interval, performing a Fourier transform on audio data corresponding to the audio interval to acquire frequency domain information; and
setting a sound signal feature value corresponding to a maximum frequency in the frequency domain information as the feature value corresponding to the audio interval.

10. The method according to claim 8 or 9, wherein generating first audio fingerprint data according to M feature values corresponding to the M audio intervals, and generating second audio fingerprint data according to N feature values corresponding to the N audio intervals, comprises:
arranging the M feature values corresponding to the M audio intervals in a preset order to acquire the first audio fingerprint data; and
arranging the N feature values corresponding to the N audio intervals in a preset order to acquire the second audio fingerprint data;
wherein the preset order is a time order, and the value of M is equal to N.

11. The method according to any one of claims 1 to 10, wherein after playing the target audio, the first device and the second device collect ambient sounds within the same period of time to acquire the first ambient sound file and the second ambient sound file.

12. The method according to any one of claims 1 to 10, wherein
the first device is a vehicle, and the second device is at least one of a mobile phone and a smart wearable product.

13. An information identification system, comprising:
a first device (10), and a second device (20) communicatively connected to the first device;
the first device being configured to play a target audio, and acquire a first ambient sound file, and the first ambient sound file comprising the target audio and being collected by the first device;
the second device being configured to collect a second ambient sound to generate a second ambient sound file;
the first device further being configured to receive the second ambient sound file, and determine whether to perform an unlocking operation according to the first ambient sound file and the second ambient sound file.

14. An electronic device, comprising:
a memory, configured to store a computer program; and
a processor, configured to execute the program stored in the memory to implement the steps of the information identification method according to any one of claims 1 to 12.

15. A computer-readable storage medium having a computer program stored thereon, wherein the program implementing the steps of the information identification method according to any one of claims 1 to 12 when executed by a processor.

16. A vehicle, comprising the electronic device according to claim 14.
